# EUROPÄISCHE PATENTSCHRIFT

(11) **EP 1 654 129 B1**
(45) Veröffentlichungstag und Bekanntmachung des Hinweises auf die Patenterteilung: **21.05.2008**
(21) Anmeldenummer: 04764005.7
(22) Anmeldetag: 12.08.2004
(51) Int. Cl.: B44C 5/04, B32B 7/12

(54) **DEKORATIVE SELBSTKLEBENDE SCHICHTPRESSSTOFFPLATTE**
DECORATIVE SELF-ADHESIVE LAMINATED PLATE
PLAQUE STRATIFIEE AUTOCOLLANTE DECORATIVE

(30) Priorität: 14.08.2003 DE 10337351
(43) Veröffentlichungstag der Anmeldung: 10.05.2006
(73) Patentinhaber: RESOPAL GMBH, D-64823 Gross-Umstadt (DE)
(72) Erfinder: SCHAEFER, Donald, 91522 Ansbach (DE); REITZEL, Lutz, 64846 Gross-Zimmern (DE)
(74) Vertreter: Luderschmidt, Schüler & Partner
(86) Internationale Anmeldenummer: PCT/EP2004/009001
(87) Internationale Veröffentlichungsnummer: WO 2005/016663

(56) Entgegenhaltungen:
- WO-A-94/00526
- US-A- 3 239 478
- US-A- 3 427 269
- US-A- 3 701 711

## Beschreibung

Die vorliegende Erfindung betrifft eine dekorative Schichtpressstoffplatte, die mit einer selbstklebenden Schicht eines quellfreien Haftklebemittels beschichtet ist. Außerdem betrifft die Erfindung ein Verfahren zur Herstellung einer solchen Schichtpressstoffplatte und ein Verbundmaterial aus der Platte und einem Träger.

Schichtpressstoffe werden heutzutage in vielen Lebensbereichen für Dekorationszwecke verwendet. Sie finden zum Beispiel Anwendung im Innenausbau zur Verkleidung von Fenstern, Treppen und Fußböden, und bei der Beschichtung von Möbeln, sowohl im privaten als auch im gewerblichen Bereich.

Schichtpressstoffe bestehen gewöhnlich aus Cellulosebahnen, die mit härtbaren Kunstharzen imprägniert und unter Hitze und hohem Druck verpresst wurden. Eine oder mehrere Bahnen auf einer oder beiden Plattenseiten zeigen dekorative Farben oder Dekors. Solche Schichtpressstoffplatten (high pressure laminate - HPL) werden zum Beispiel unter dem Handelsnamen Resopal vertrieben.

Das Aufbringen des Schichtstoffs auf einem Träger geschieht mit einem wäßrigen Klebstoff. Je nach Klebstoffart müssen dabei verschiedene Bedingungen genau eingehalten werden, um eine Beschichtung guter Qualität und Stabilität zu erhalten. Nach den bisherigen Verfahren müssen der Schichtpressstoff und der Träger nach Auftrag des Klebstoffs unmittelbar oder nach einer kurzen Wartezeit zusammengefügt werden. Das Zusanunenfügen geschieht nach den bisherigen Verfahren unter einem Pressdruck von 2 bis 5 bar und bei einer Temperatur von bis zu 120°C.

Das Dokument WO 94/00526 offenbart eine weitere Schichtpressstoffplatte mit einer Klebstoffschicht. Die Schichtpressstoffplatte wird mit Wärme und ohne Druck auf einen Träger aufgebracht.

Weiterhin muss der Klebstoffauftrag herkömmlicherweise über die Fläche gleichmäßig verteilt erfolgen. Bei Verbundelementen ist darauf zu achten, dass die Auftragsmenge auf beiden Seiten dieselbe ist, um Verzugserscheinungen zu vermeiden. Dies gilt insbesondere für wasserhaltige Klebstoffsysteme, bei denen die Auftragsmenge möglichst gering zu halten ist.

Bei nicht gleichmäßigem Klebstoffauftrag und ungenauer Einhaltung von Pressdruck, Presstemperatur und Presszeit erhält man unbefriedigende Ergebnisse bei der Klebung. So führen zum Beispiel zu hohe Temperaturen zu Verzugserscheinungen und Materialschädigungen. Zu geringe Temperaturen oder Drücke resultieren hingegeben in einer ungenügenden Haftung. Dabei müssen je nach Klebstoffsystem der Pressdruck und die Presstemperatur zwischen einigen Minuten und bis zu mehreren Stunden aufrecht erhalten werden. Gegebenenfalls muß über Nacht bis zur endgültigen Aushärtung gewartet werden.

Bei Arbeiten mit lösemittelhaltigen Kontaktklebstoffen sind insbesondere Arbeitsschutz und Unfallverhütungsvorschriften zu beachten. Ferner ist darauf hinzuweisen, dass der Einsatz von lösemittelhaltigen Klebstoffen aus gesundheitlicher und umweltpolitischer Sicht als problematisch einzustufen ist. Der Einsatz von Dispersionsklebstoffen auf Wasserbasis, wie zum Beispiel Weißleim, führt häufig zum partiellen Aufquellen der Trägeroberfläche, was zum Beispiel beim Einsatz von Spanplatten als Trägermaterial häufig der Fall ist. Infolgedessen wird häufig eine leicht gewellte bzw. nicht gleichmäßig ebene Oberfläche erhalten.

Außerdem dauert die Trocknung wasser- oder lösemittelhaltiger Kleber bis zu einigen Stunden.

Reaktionsklebstoffe, wie zum Beispiel Epoxid, Polyester oder Polyurethanklebstoffe, sind ebenfalls gesundheitlich bedenklich und erfordern eine genaue Kenntnis und Einhaltung der Verarbeitungsbedingungen.

Die bisherigen Klebstoffe und Klebverfahren erfordern einen hohen apparativen Aufwand, zum Beispiel zur Anwendung eines gleichmäßigen und hohen Pressdrucks und zur Aufrechterhaltung der Temperatur. Je nach Klebstoff kann die Aushärtung bis zur Erreichung einer ausreichenden Haftung mehrere Stunden benötigen.

Die vorangehend genannten Umstände erschweren den Einsatz und die erfolgreiche Verarbeitung von Schichtpressstoffen besonders im privaten Bereich oder im Handwerkerbereich.

In Anbetracht dieses Standes der Technik war es nun Ziel der vorliegenden Erfindung, die zuvor genannten Probleme zu lösen. Dabei sollten neben den Bedürfnissen des gewerblichen Bereichs auch die Bedürfnisse des Privatanwenders hinsichtlich einer einfachen Verarbeitung berücksichtigt werden.

Insbesondere war es eine Aufgabe der vorliegenden Erfindung, eine dekorative Schichtpressstoffplatte zur Verfügung zu stellen, die schnell und fest auf einem Träger haftet, ohne dass lange Wartezeiten in Kauf genommen werden müssen.

Die schnelle und feste Haftung des Schichtstoffs auf dem Träger sollte auch ohne Anwendung und genaue Einhaltung hoher Drücken bzw. hoher Temperaturen bei der Verarbeitung gegeben sein.

Eine weitere Aufgabe der vorliegenden Erfindung bestand darin, die Handhabung und Aufbringung des Klebstoffes auf den Träger möglichst zu vereinfachen. Insbesondere sollte die Schwierigkeit des gleichmäßigen Auftrags des Klebstoffs vermieden werden.

Ferner war es ein Ziel der vorliegenden Erfindung, einen dekorativen Schichtpressstoff zur Verfügung zu stellen, der ohne Einsatz von Wasser oder Lösemitteln verklebt werden kann und aus gesundheitlicher Sicht und unter Sicherheitsaspekten möglichst unbedenklich ist.

Schließlich bestand eine Aufgabe der vorliegenden Erfindung darin, eine dekorative Schichtpressstoffplatte zur Verfügung zu stellen, die nach Aufbringung auf einen Träger eine möglichst gleichmäßig ebene Oberfläche liefert.

Gelöst werden diese sowie weitere nicht explizit genannte Aufgaben, die jedoch aus den hierin einleitend diskutierten Zusammenhängen ohne Weiteres ableitbar sind, durch eine dekorative Schichtpressstoffplatte mit allen Merkmalen des Patentanspruches 1.

Zweckmäßige Abwandlungen der erfindungsgemäßen Schichtpressstoffplatte werden in den auf Anspruch 1 rückbezogenen Unteransprüchen unter Schutz gestellt.

Ein Verfahren zur Herstellung der erfindungsgemäßen Schichtpressstoffplatte wird im unabhängigen Verfahrensanspruch beschrieben.

Weiterhin wird ein Verbundmaterial aus einem Träger und der Schichtpressstoffplatte und die Verwendung der Schichtpressstoffplatte zur Beschichtung von Trägem beansprucht.

Dadurch, dass man eine dekorative Schichtpressstoffplatte mit einer Klebstoffschicht zur Verfügung stellt, die dadurch gekennzeichnet ist, dass die Klebstoffschicht eine bei Raumtemperatur selbstklebende Schicht eines physikalisch abbindenden, lösemittelfreien Haftklebemittels ist, wobei die Schichtpressstoffplatte nach dem Aufbringen auf einen Träger bei Raumtemperatur eine Abhebekraft von mindestens 0,2 N/mm² aufweist, gelingt es auf nicht ohne weiteres vorhersehbare Weise, eine Schichtpressstoffplatte bereitzustellen, die schnell und fest auf einem Träger haftet, ohne dass lange Wartezeiten in Kauf genommen werden müssen.

Außerdem werden durch die vorliegende Erfindung die folgenden Vorteile erzielt:
- Die Aufbringung des Schichtpressstoffs auf dem Träger kann ohne Anwendung hoher Drücke und erhöhter Temperaturen erfolgen. Ein einfacher kurzer Anpressdruck, wie z.B. von Hand, auf die Platte genügt, um diese sofort auf dem Träger haften zu lassen.
- Zusätzlich zu den zuvor genannten Vorteilen haftet die Platte stabil auf einem Träger. So erhält man z.B. eine sehr hohe Abhebekraft der Platte vom Träger. Ferner werden ein hoher Schälwiderstand und eine hohe statische Scherfestigkeit erzielt.
- Auch bei einer Temperaturbelastung des Verbundes aus Schichtstoffplatte und Träger über eine längere Zeit bleibt die Anhaftung stabil und es tritt kein Abschälen des Dekor-Schichtpressstoffs vom Träger auf. Die Haftungseigenschaften wie z.B. die Abhebekraft, die Scherfestigkeit und die Schälfestigkeit bleiben auch bei Temperaturbelastung im wesentlichen erhalten.
- Die zuvor genannten Eigenschaften werden bereits bei einer geringen Auftragsmenge bzw. Schichtdicke des Klebstoffes erzielt, so dass dieser materialsparend eingesetzt werden kann.
- Ein weiterer Vorteil besteht darin, dass die Klebstoffauftragung nicht vom Endanwender selbst vorgenommen werden muss. Die Rückseite der Platte ist bereits mit dem Klebstoff versehen und kann sofort verarbeitet, d.h. auf dem Träger aufgebracht werden, ohne dass Verarbeitungsbedingungen des Klebstoffs, ein gleichmäßiger Auftrag etc. beachtet werden müssen.
- Die erfindungsgemäß bereits mit Klebstoff versehene Platte kann über lange Zeit gelagert werden. Es ist nicht nötig, sie nach Aufbringen des Klebstoffs sofort zu verarbeiten, wie dies bei bisherigen Klebsystemen der Fall ist.
- Die erfindungsgemäße Schichtpressstoffplatte liefert nach Aufbringung auf einen Träger eine besonders gleichmäßige und ebene Oberfläche.
- Zudem entfällt der Einsatz von Lösemitteln und Dispergiermitteln beim Verkleben der erfindungsgemäßen Platte, was unter Umwelt- und Gesundheitsaspekten besonders vorteilhaft ist.
- Schließlich enthält der erfindungsgemäß verwendete Kleber nur schwerflüchtige Weichmacher mit sehr geringer Ausdünstung. Zum einen wird dadurch die Klebequalität über längere Zeiträume erhalten. Zum anderen werden Beinträchtigungen von Umwelt und Gesundheit durch Weichmacherausdünstung minimiert.

Die zuvor genannten Vorteile ermöglichen insbesondere dem Privatanwender und dem Handwerker ohne maschinelle Ausstattung eine einfache und erfolgreiche Verarbeitung von Schichtpresstoffplatten. Die Verarbeitung kann direkt vor Ort vorgenommen werden, ohne dass Maschinen oder spezielle Gerätschaften zur Verarbeitung verwendet werden müssen. Durch die einfache und schnelle Möglichkeit der Verarbeitung eignet sich die erfindungsgemäße Platte insbesondere auch für den Heimanwender zur Aufwertung und Verkleidung von Möbeln, Türoberflächen, Wänden etc.

Nachfolgend wird die Erfindung detailliert beschrieben.

Erfindungsgemäß bezeichnen Schichtstoffe Verbundwerkstoffe aus Trägermaterialien, wie beispielsweise Glasfasergeweben, Papier, Holz, Textilien, Kunststoff-Folien, Hartpapier, Hartgewebe, Pressholz, die durch schichtweises Aufbauen (das sogenannte Laminieren) von mit Kunststoffharzen, wie beispielsweise Epoxid-, Melaminharzen, Thermoplasten, Phenoplasten, Harnstoff Fonnaldehyd-Harzen, bestrichenen oder getränkten Papier- oder Gewebebahnen oder Glasfasermatten und durch Anwendung von Druck und Wärme hergestellt werden. Sie werden im Stand der Technik vereinzelt auch als "Schichtpressstoffe" oder "Laminate" bezeichnet und werden in vielfältigen Ausführungsformen, wie beispielsweise Platten, Rundstäbe, Rohre, Lang- und Konstruktionsformteile, für viele verschiedene Anwendungen, wie beispielsweise gedruckte Schaltungen, für den Flugzeug-, Fahrzeug-, Bootsbau, wetterfeste Verkleidungen, Sportgeräte (z. B. Skier) und dekorative Zwecke, eingesetzt.

Für die Zwecke der vorliegenden Erfindung hat sich der Einsatz von Hochdruck-Schichtpressstoffplatten, sog. HPLs, als ganz besonders günstig erwiesen. Diese weisen mit härtbaren Harzen imprägnierte Schichten von Faserstoffbahnen, vorzugsweise Papier, und gegebenenfalls eine oder mehrere Dekorschichten auf, wobei die Dekorschichten mit dekorativen Farben und/oder Mustern versehen und vorzugsweise mit Harzen auf Melaminbasis imprägniert sind. Erfindungsgemäß können ebenso die kontinuierlich hergestellten Schichtpressstoffplatten (CPL) eingesetzt werden.

Weitere Details zu den zuvor beschriebenen Materialien kann der Fachmann der gängigen Fachliteratur, beispielsweise Ullmann's Encyclopedia of Industrial Chemistry, 4. Auflage, Bd. 15, S. 326 ff. und den Normen DIN EN 438 Teil 1, DIN EN 438 Teil 2, ISO 4586-1 und ISO 4586-Teil 2 entnehmen.

Die Herstellung dieser dekorativen Hochdruck-Schichtpressstoffplatten erfolgt vorzugsweise durch ein Verfahren, bei welchem man die Faserstoffbahnen mit mindestens einem härtbaren Harz imprägniert und dann durch gleichzeitige Anwendung von Wärme, vorzugsweise bei einer Temperatur im Bereich von 120 bis 150°C, und erhöhtem Druck von mindestens 7 MPa verpresst, damit die Harze zunächst fließen und anschließend aushärten. Man erhält einen homogenen geschlossenen Werkstoff mit erhöhter Dichte, vorzugsweise ≥ 1,35 g/cm³, und der gewünschten Oberflächenbeschaffenheit. Im Rahmen dieses Verfahrens werden vorzugsweise diskontinuierliche Mehretagenpressen eingesetzt.

Alternativ hat sich auch ein Verfahren besonders bewährt, bei dem man die Faserstoffbahnen mit den hitzehärtbaren Harzen imprägniert und dann auf Doppelbandpressen bei hoher Temperatur, vorzugsweise im Bereich von 140 bis 200°C, kontinuierlich verpresst. Man erhält gemäss diesem Verfahren die sogenannten kontinuierlich hergestellten Schichtpressstoffplatten, die häufig abgekürzt als CPLs bezeichnet werden.

Im Rahmen einer weiteren, besonders bevorzugten Ausführungsform der vorliegenden Erfindung werden Kunststofflaminate, insbesondere Polyesterlaminate aus Papierbahnen, die mit mindestens einem Polyesterharz imprägniert sind, als Schichtstoffplatten verwendet. Dabei weisen eine oder beide Laminatseiten vorzugsweise ein mit Polyesterharz imprägniertes Dekorpapier auf. Die Herstellung dieser Polyesterlaminate erfolgt vorzugsweise kontinuierlich.

Die Dicke der erfindungsgemäß einzusetzenden Schichtstoffplatten kann prinzipiell je nach Anwendungsgebiet frei gewählt werden, sie liegt im Allgemeinen im Bereich von 0,2 mm bis 20 mm oder 0,3 bis 15 mm. Zweckmäßigerweise kann die Dicke auch im Bereich von 0,5 mm bis 3,0 mm oder im Bereich von 0,6 bis 2,5 mm liegen. Ganz besonders bevorzugt beträgt die Dicke 0,6 bis 1,6 mm und am meisten bevorzugt 0,6 bis 1,2 mm.

In einer bevorzugten Ausführungsform der vorliegenden Erfindung wird ein physikalisch abbindender, lösemittelfreier Haftklebstoff eingesetzt, der mindestens ein thermoplastisches Elastomer, mindestens ein Blockcopolymer, mindestens einen schwerflüchtigen Weichmacher und mindestens ein Kohlenwasserstoffharz umfasst. Lösemittelfrei bedeutet, dass der Klebstoff kein Wasser und keine organischen Flüssigkeiten enthält, welche als Löse- oder Dispergiemittel wirken. Die genannten Komponenten des Haftklebstoffs werden nachfolgend beschrieben.

Das thermoplastische Elastomer des Klebstoffs ist bevorzugt ausgewählt aus den natürlichen Kautschuken, Polyisobutylenkautschuk, Ethylen-Propylen-Kautschuk (EPR), Styrol-Butadien-Kautschuk, Ethylen-Propylen-Dien-Terpolymer-Kautschuk (EPDM), Butylkautschuk, Ethylen-Vinylacetat-Copolymer, Ethylen-(Meth)Acrylsäure-Copolymer, Ethylen-(Meth)Acrylat-Copolymer, Ethylen-(Meth)Acrylsäure-(Meth)acrylat-Terpolymer und Acrylatkautschuken.

Ein besonders bevorzugtes thermoplastisches Elastomer ist polyisobutylenkautschuk mit einer zahlenmittleren Molmasse zwischen 300.000 - 2.500.000 g/mol, bevorzugt zwischen 400.000 - 1.500.000 g/mol insbesondere etwa 800.000 g/mol (nach GPC). Der Polyisobutylenkautschuk kann ein- oder mehrere Comonomere enthalten, welche ausgewählt sind aus Styrol, ringsubstituierten Styrolen, Divinylbenzol, Isopren, Inden, 1,3-Butadien, Cyclopentadien. Der Anteil an Isobuten in dem Polyisobutylenkautschuk beträgt ≥90%.

Der Gewichtsanteil des thermoplastischen Elastomers beträgt bezogen auf das Gesamtgewicht des Klebstoffs zwischen 10 und 70 Gew.-% und bevorzugt zwischen 30 und 60 Gew.-%.

Zusätzlich zu dem zuvor genannten hochmolekularen Kautschuk oder anstattdessen kann dem Klebstoff ein niedermolekularer Polyisobutylenkautschuk mit einer Molmasse zwischen 800 und etwa 5000 g/mol zugesetzt sein. Der Gewichtsanteil des niedermolekularen Kautschuks Elastomers beträgt zwischen 18 und 25 Gew.-% bezogen auf das Gesamtgewicht des Klebstoffs.

Erfindungsgemäß im Klebstoff einsetzbare Isobutylenkautschuke sind von der Bayer AG unter den Handelsnamen Butyl® (Copolymerisat aus Isobutylen und Isopren) und Polysar Butyl XL® (Copolymerisat aus Isobutylen, Isopren und Divinylbenzol) erhältlich.

Vorzugsweise verwendete Blockcopolymere besitzen mindestens zwei Endblöcke aus einem vinylaromatischen Monomer (Block A) und mindestens einen Mittelblock (Block B), welcher entweder ein konjugiertes Dien enthält oder aus einem Ethylen-Butylen Copolymer oder aus einem Ethylen-Propylen-Copolymer gebildet ist. Die Konfiguration kann je nach Herstellungsverfahren linear, gepfropft, oder sternförmig sein.

Typische Blockcopolymere mit einfachster Konformation besitzen die Struktur Polystyrol-Polybutadien-Polystyrol (SBS) oder Polystyrol-Polyisopren-Polystyrol (SIS) oder Polystyrol-Poyetyhylen/Polybutylen-Polystyrol. Ein typisches radiales oder Stempolymer umfasst ein solches, in dem der B-Block drei oder vier Zweige (radial) oder mehr Zweige besitzt (Stern).

Die Endblöcke A des Copolymers werden aus einer oder mehreren vinylaromatischen Monomeren gebildet, welche vorzugsweise ausgewählt sind aus Styrol, ringalkylierten Styrolen wie z.B. alpha-Methylstyrol und Vinyltoluol und polycyclischen vinylaromatischen Verbindungen, wie z.B. Vinylnaphthalin. Bevorzugt sind Styrol und alpha-Methylstyrol. Speziell bevorzugt ist Styrol. Ein Block, der wie der Endblock A aufgebaut ist, kann außer an den Enden auch noch ein- oder mehrmalig inmitten der Polymerkette vorhanden sein.

Sofern der Mittelblock B des Blockcopolymers ein konjugiertes Dien enthält, kann er ein Homopolymer eines konjugiertes Dien, ein Copolymer aus mehreren konjugierten Dienen oder ein Copolymer aus einem konjugierten Dien und einer vinylaromatischen Verbindung, wie z.B. Styrol oder alpha-Methylstyrol sein, solange das konjugierte Dien überwiegt. Das konjugierte Dien ist bevorzugt ausgewählt aus einer Verbindung mit 4-8 C-Atomen, wie z.B. Butadien, Isopren, 2,3-Dimethyl-1 ,3-Butadien und Piperylen, wobei Butadien und Isopren bevorzugt sind.

Sofern der Block B ein konjugiertes Dien enthält, kann er teilweise oder vollständig hydriert sein. Zusätzlich können auch die A-Blöcke teilweise oder vollständig hydriert sein.

Das durchschnittliche Molekulargewicht eines A-Blocks beträgt 5.000 - 125.000 g/mol und bevorzugt 6.000 - 60.000 g/mol (Gewichtsmittel nach GPC). Das durchschnittliche Molekulargewicht eines B-Blocks beträgt 10.000 - 300.000 g/mol und bevorzugt 30.000 - 150.000 g/mol (Gewichtsmittel nach GPC). Das Gesamtgewicht des Blockcopolymers liegt zwischen 25.000 bis etwa 350.000 g/mol, vorzugsweise zwischen 35.000 - 300.000 g/mol (Gewichtsmittel nach GPC). Vorteilhafterweise beträgt der Anteil des A-Blocks 5 - 65 Gew.-% und vorzugsweise 35-50 Gew.-% bezogen auf das Blockcopolymer. Ein weiterer vorteilhafter Bereich liegt zwischen 5 und 30 Gew.-%.

Einzelheiten der Herstellung der genannten Blockcopolymere sind den Schriften EP 0 537 115 A1 und den US-Patentschriften 3,239,478; 3,427,269; 3,700,633; 3,753,936 und 3,932,327 zu entnehmen.

Die genannten Polymere können einzeln oder in Kombination miteinander eingesetzt werden.

Der Gewichtsanteil des Blockcopolymers beträgt zwischen 5 - 50 Gew.-% insbesondere 10 - 40 Gew.-% bezogen auf das Gesamtgewicht des Klebstoffs. Ein bevorzugter Bereich des Gewichtsanteils an Blockcopolymer ist 12-25 Gew.-%, und insbesondere 15-20 Gew.-%. Ein weiterer vorteilhafter Bereich liegt zwischen 30 und 40 Gew.-%

Im Rahmen der Erfindung verwendbare Blockcopolymere sind von der Shell AG unter den Handelsnamen KRATON G1650, G1651, G1652, G1657, G 4309, (lineare Styrol-Ethylen/Butylen-Ethylen-Blockcopolymere verschiedener Blocklängen), KRATON RP-6906, KRATON DX1122 und KRATON D1118X erhältlich.

Zum Aufbau der ausgeprägten Dauerklebrigkeit sind dem Klebstoff in einer vorteilhaften Ausführungsform synthetische Weichmacher mit geringer Flüchtigkeit (Abdampfverlust bzw. Migration) bei hohen Temperaturen (> 120 °C) enthalten.

Die im Kleber enthaltenen Weichmacher sind synthetische Weichmacher mit hohem Siedepunkt und Dampfdruck, die schwerflüchtig sind eine nur geringe Ausdünstung aus dem Klebstoff zeigen.

Solche Weichmacher sind vorzugsweise ausgewählt aus Mineralölen, Paraffinölen, Olefinoligomeren und Polymeren niederen Molekulargewichts. Als Oligomere können z.B. Polypropylene, Polybutene, hydrierte Polyisoprene, hydrierte Butadiene etc. eingesetzt werden, wobei das Molekulargewicht vorteilhaft zwischen 350 und 10.000 g/mol liegt.

Der Gewichtsanteil an Weichmachern beträgt zwischen 0 -30 Gew.-% und vorzugsweise 5 bis etwa 15 Gew.-% bezogen auf das Gesamtgewicht des Klebstoffs.

Weiterhin können dem Klebstoff Kohlenwasserstoffharze zugesetzt sein, um eine ausgeprägtere Oberflächenklebrigkeit zu erzielen. Die Oberflächenklebrigkeit (Tack) ermöglicht eine ausgeprägte Klebrigkeit in Verbindung mit niedrigen Verpresskräften bei der Montage.

Eine Gruppe der im Kleber enthaltenen Kohlenwasserstoffharze (Tackifier) sind natürliche und modifizierte Harze, wie z.B. Gummiharz, Holzharz, Tallölharz Destillatharz und Terpentinharz, Hydrierharz, dimierisiertes Harz und polymerisiertes Harz. Ebenso sind Glycerin- und Pentaerythritolester von natürlichen und modifizierten Harzen, wie z.B. den oben genannten, einsetzbar.

Weitere im Klebstoff als Tackifier verwendbarer Harze sind Polyterpenharze, hydrierte Polyterpenharze, Copolymere und Terpolymere natürlicher Terpene, wie z.B. Styrol/Terpen, alpha-Methylstyrol/Terpen und Vinyltoluol/Terpen. Ebenso verwendbar sind phenolmodifizierte Terpenharze, die z.B. durch Kondensation eines Terpens und eines Phenols erhalten werden können. Schließlich sind als Kohlenwasserstoffharz auch aliphatische, cycloaliphatische, aromatische und aliphatisch/aromatische Harze auf Erdölbasis einsetzbar. Weitere erfindungsgemäß einsetzbare und dem Fachmann bekannte Harze sind in der Schrift EP 0 537 115 A1 (Seite 4) genannt.

Der Gewichtsanteil des Kohlenwasserstoffharzes beträgt zwischen 15-80 Gew.-% bezogen auf das Gesamtgewicht des Klebstoffs, bevorzugt 20-65 Gew.-%, noch mehr bevorzugt 30-60 Gew.-%.

Dem erfindungsgemäß verwendete Klebstoff kann schließlich übliche und dem Fachmann bekannte Stabilisatoren, Antioxidanzien und weitere Hilfs-, Füll- und Zusatzstoffe enthalten. Antioxidanzien können vorteilhaft ausgewählt sein aus den gehinderten Phenolen und multifunktionellen Phenolen, wie Schwefel- und Phosphor-haltigen Phenolen. Eine Übersicht über solche Stabilisatoren und Zusatzstoffe geben die Schriften US 6,143,818, Spalte 8 und EP 0 537 115 A1. Der Gewichtsanteil an Stabilisatoren beträgt zwischen 0,1-2 Gew.-% bezogen auf das Gesamtgewicht des Klebstoffs und bevorzugt 0,1-1 Gew.-%.

Die erfindungsgemäß eingesetzten, physikalisch abbindenden Haftklebstoffe besitzen sowohl eine hohe Klebrigkeit, eine starke Soforthaftung (Tack) als auch eine hohe Kohäsion und gute Kriechfestigkeit. Durch die letztgenannten Eigenschaften sind die eingesetzten Haftklebstoffe bzw. die aufgeklebte Schichtpressstoffplatte mechanisch belastbar. Vorzugsweise sind die eingesetzten Klebstoffe auch beständig gegen Wasser, schwache Säuren und Laugen.

Dadurch, dass die eingesetzten Haftklebstoffe frei von Wasser oder anderen Lösungsmitteln oder Dispergiermitteln sind, bewirken sie bei einem saugfähigen Träger keinen Aufquellen des Materials durch Flüssigkeit. In diesem Sinn sind die verwendeten Klebstoffe quellfrei.

Vorteilhaft werden solche der zuvor beschriebenen Haftklebemittel eingesetzt, die einen Festkörpergehalt von 100%, eine Dichte von cs. 1 g/cm³ (bei 20°C), eine Viskosität bei 160°C von 15.000 - 65.000 Mpas (Brookfield Thermosel, Sp. 27), eine Verarbeitungstemperatur von 150 - 190°C, einen Erweichungspunkt von 90-135°C (DIN 52011), eine statische Scherfestigkeit bei Raumtemperatur von 5 - 15 kg (basierend auf DIN EN 1943), eine Schälfestigkeit von 35 - 65 N/25 mm (basierend auf DIN EN 1939) und eine Scherfestigkeitsverlusttemperatur (Meßmethode s. Beispiele) zwischen 60 und 105° C, insbesondere zwischen 65 und 97°C aufweisen.

Die auf die Schichtpressstoffplatte aufgebrachte Klebeschicht wird zum Schutz in einer bevorzugten Ausführungsform mit einer klebstoffabweisenden Schicht bedeckt, die vorzugsweise aus einem siliconisierten Papier besteht. In diesem Zustand kann die Platte bis zu 12 Monaten gelagert werden, ohne ihre Klebeeigenschaften zu verlieren oder nennenswert einzubüßen.

Die Auftragsmenge der zuvor beschriebenen Klebemittel auf die Schichtpressstoffplatte beträgt im Allgemeinen zwischen 80 bis 300 g/m², vorzugsweise 140 bis 240 g/m² und besonders bevorzugt 150 bis 200 g/m².

Die Schichtdicke des Klebemittels auf der Schichtpressstoffplatte beträgt im Allgemeinen zwischen 0,08 bis 0,30 mm, bevorzugt 0,14 bis 0,24 mm und besonders bevorzugt 0,15 bis 0,20 mm.

Die Anpresszeit bei Aufbringen der Schichtpresstoffplatte beträgt erfindungsgemäß weniger als 5 Sekunden, wobei vorteilhafterweise eine Anpresszeit von 1 bis 3 Sekunden für das Zustandebringen einer Haftung mit den nachfolgend genannten mechanischen Eigenschaften genügend ist.

Der notwendige Anpressdruck bei Aufbringen der Schichtpressstoffplatte auf den Träger beträgt erfindungsgemäß höchstens 2 bar. Besonders vorteilhaft wird ein Anpressdruck von 0,2 bis 1 bar gewählt und insbesondere 0,3-0,6 bar. Im Allgemeinen genügt ein leichter Druck per Hand, um eine vollständige Anhaftung zu erzielen. Bei größeren Flächen ist in gleichmäßiger Andruck mittels einer Rolle vorteilhaft.

Die Verarbeitung der erfindungsgemäßen kleberbeschichteten Schichtpresstoffplatte erfolgt bevorzugt in dem Temperaturbereich von +5 bis +35 °C. Vorteilhaft kann sie bei Raumtemperatur auf einen Träger aufgebracht werden.

Die Abhebekraft, die zum Abheben der auf einen Träger aufgebrachten Schichtstoffplatte vom Träger nötig ist, beträgt erfindungsgemäß mindestens 0,2 N/mm². Vorteilhaft beträgt die Abhebekraft 0,2 bis 2 N/mm², bevorzugt 0,5 bis 1,5 N/mm² und besonders bevorzugt 0,8 bis 1,2 N/mm². Diese Werte der Abhebekraft werden erzielt, wenn die Platte bei Raumtemperatur und den zuvor genannten Anpressdrücken oder durch leichtes Anpressen per Hand oder Rolle verarbeitet wird. Die Abhebekraft wird nach dem in der Europäischen Norm EN 311 beschriebenen Verfahren bestimmt.

Wahlweise kann die Abhebekraft gesteigert werden, indem man den Anpressdruck über die zuvor genannten Wertbereiche erhöht. Dies ist aber für die Erfindung nicht notwendig und kann optional durchgeführt werden, falls erwünscht.

Ebenso kann die Abhebekraft der Platte vom Träger erhöht werden, indem man die Platte und die Kleberschicht kurz vor oder während des Anklebens auf den Träger erwärmt. Auch diese Maßnahme ist im Sinne der vorliegenden Erfindung nicht notwendig und lediglich optional.

Außerdem kann die Abhebekraft wahlweise erhöht werden, ohne dass dies erfindungsgemäß notwendig ist, wenn die Oberfläche der Schichtpresstoffplatte, auf welche der Kleber aufgebracht wird, vor Aufbringen des Kleber mit üblichen Schleifmitteln aufgerauht wird.

Schließlich ist es vorteilhaft aber nicht zwingend notwendig, die Oberfläche der Schichtpresstoffplatte, auf welche der Kleber aufgebracht wird, mit üblichen Haftgrundierungsmitteln für Klebstoffe, haftvermittelnden Voranstrichen oder Primem vorzubehandeln. Übliche Haftgrundierungsmittel sind z.B. Ethylen-Acrylamid-Copolymere, polymere Isocyanate und reaktive Silizium-organische Verbindungen.

Die erfindungsgemäße Schichtpressstoffplatte zeichnet sich dadurch aus, dass bis zu einer Temperaturbelastung von 80°C über mindestens 2 Stunden kein Abschälen der Platte von einem Trägermaterial, insbesondere von einer Spanplatte, auftritt. Insbesondere wird bei dem Verbund aus der erfindungsgemäßen Schichtpressstoffplatte und einem Träger nach mindestens zweistündiger Temperaturbelastung mit 50 bis 70°C kein Abschälen beobachtet.

Dazu wird die auf einen Träger aufgebrachte Schichtpresstoffplatte bei Raumtemperatur in einen Ofen eingebracht, welcher mit Umgebungsluft gefüllt ist. D.h. die Luft im Inneren des Ofens besitzt die gleiche Temperatur und relative Luftfeuchtigkeit wie die Umgebungsluft. Die relative Feuchtigkeit der Umgebungsluft wird in diesem Zusammenhang als normale Raumfeuchtigkeit bezeichnet. Bevorzugte Bedingungen sind eine Temperatur von 20-23°C und eine relative Feuchtigkeit von 60-65% zu Beginn der Messung.

Anschließend wird der Ofen geschlossen auf 80°C erhitzt und mindestens 2 Stunden bei dieser Temperatur gehalten.

Die Schichtpressstoffplatte der vorliegenden Erfindung kann auf verschiedenste Arten von Trägem aufgebracht werden, wobei die Art des Trägers nicht besonders beschränkt ist. Bevorzugte Trägermaterialien sind melaminbeschichtete Spanplatten, mit Schichtstoff beschichtete Trägerplatten, mitteldichte Faserplatten, Hartfaserplatten, Tischlerplatten, Furnierplatten, Massivholz, Waben, Schaumstoffe, Metallplatten, Bleche, mineralische Träger, Natur- oder Kunststein, Fliesen und Gipskartonplatten.

In einem Aspekt betrifft die Erfindung ein Verbundmaterial, welches einen der zuvor genannten Träger und eine auf dem Träger haftende erfindungsgemäße Schichtpressstoffplatte umfasst.

Dabei kann die Schichtpressstoffplatte vorteilhaft sowohl auf flüssigkeitsaufnehmende (saugfähige) Träger, wie z.B. unbeschichtete Spanplatten und unbeschichtetes Holz, als auch auf nicht flüssigkeitsaufnehmende (nicht saugfähige) Träger, wie z.B. Metalle, Keramik, Glas, beschichtete Hölzer, beschichtete Spanplatten etc., aufgebracht werden.

Der erfindungsgemäße Verbund zeichnet sich durch eine besonders gleichmäßige und ebene Oberfläche auf Seiten der aufgebrachten Schichtpresstoffplatte aus. So beträgt die maximale Höhendifferenz auf Seiten der Dekorschicht zwischen 0,05 - 0,5 mm, vorzugsweise zwischen 0,05 - 0,2 mm. Die Gleichmäßigkeit kann in der Praxis leicht durch Augenschein festgestellt werden, wie z.B. durch die unverzerrte Widerspiegelung einer Lichtquelle (z.B. Neonröhre) auf der Oberfläche der auf den Träger aufgebrachten Schichtpresstoffplatte. Ebenso kann die Gleichmäßigkeit der Oberfläche haptisch festgestellt werden.

Die auf einen Träger aufgebrachte erfindungsgemäße Schichtpressstoffplatte besitzt weiterhin eine gleichmäßigere und mehr ebene Oberfläche im Vergleich zu Schichtpressstoffplatten, die mit konventionellen Verfahren/Klebern auf Träger aufbracht sind.

Besonders vorteilhaft macht sich diese Eigenschaft bemerkbar, wenn die Schichtpressstoffplatte auf einen saugfähigen bzw. flüssigkeitsaufnehmenden Träger aufgebracht wird. In diesem Fall bildet die erfindungsgemäße Schichtpressstoffplatte eine gleichmäßigere und mehr ebenere Oberfläche als eine Platte, die mit einem löse- oder dispersionsmittelhaltigen Kleber aufgebracht wurde.

In einem weiteren Aspekt betrifft die vorliegende Erfindung die Verwendung der zuvor beschriebenen Schichtpressstoffplatte zur Beschichtung eines Trägermaterials, welches bevorzugt aus den zuvor genannten Trägermaterialien ausgewählt ist. Der verwendete Träger kann sowohl flüssigkeitsaufnehmend (saugfähig) als auch nicht-flüssigkeitsaufnehmend sein.

Ebenso betrifft die Erfindung die Verwendung des Verbundes aus dem Trägermaterial und dem Schichtpressstoff im Innen- und Außenausbau, wie z.B. zur Verkleidung von Wänden, Decken und Türen, und zur Herstellung und Verkleidung von Möbeln und Einrichtungsgegenständen.

Durch die zuvor beschriebenen Hafteigenschaften des Schichtpressstoffs auf dem Trägermaterial, insbesondere auf Spanplatten, und die Abschälfestigkeit bei Temperaturbelastung eignet sich der Verbund auch zur Herstellung von Einrichtungsgegenständen, die zeitweilig hohen Temperaturen ausgesetzt sind, wie z.B. Küchenarbeitsplatten.

Die vorliegende Erfindung stellt auch ein Herstellungsverfahren für eine dekorative Schichtpressstoffplatte mit einer selbstklebenden Schicht eines Haftklebemittels zur Verfügung. Dieses Verfahren ist dadurch gekennzeichnet, dass man ein Haftklebemittel bei einer Temperatur von 150 - 190° auf eine Schichtpressstoffplatte, vorteilhafterweise auf die der Dekorschicht abgewandte Rückseite, aufträgt und anschließend erkalten läßt.

Es ist von Vorteil, die Auftragsseite vor Auftrag des Klebers anzurauhen, um eine bessere Haftung zu erzielen.

Vorzugsweise wird das Klebemittel mit einer stationären Walze oder Düse auf eine kontinuierlich fortbewegte Schichtpressstoffplatte aufgetragen. Die Kleberauftragsgeschwindigkeit auf die Schichtpressstoffplatte beträgt vorteilhaft 1 bis 30 m/min betragen.

Das Klebemittel im Allgemeinen in einer Menge zwischen 80 bis 300 g/m², vorzugsweise 140 bis 240 g/m² und besonders bevorzugt 150 bis 200 g/m² auf die Schichtpressstoffplatte aufgetragen.

Der aufgebrachte Klebstoff wird vorteilhafterweise mit einer klebstoffabweisenden Schicht bedeckt, die vorzugsweise aus einem siliconisierten Papier oder einer siliconisierten Folie besteht.

Die vorliegende Erfindung wird nachfolgend anhand von Beispielen beschrieben, die in keiner Weise eine Beschränkung der erfinderischen Idee darstellen.

### 1. Herstellung der selbstklebenden Schichtpresstoffplatte

Sämtlich Angaben beziehen sich auf das Gewicht.

Aus einem auf 180° C beheizten Vorratsbehälter wurde ein Haftklebstoff auf der Basis von 25% SIS, 15% SBS und 60% Kohlenwasserstoffharz (mit einem Gehalt von 10% Polybuten) auf eine 60 cm breite, auf ca. 180°C beheizte Walze geleitet. Der thermoplastisch verflüssigte Klebstoff wurde über die Walze gefördert und auf eine mit 15 m/min unter der Walze fortbewegte HPL-Platte aufgebracht, wobei der Spalt zwischen Walze und HPL-Platte 3 mm betrug und der Klebstoff in einer Menge von 180 g/m² aufgetragen wurde. Auf die noch warme Klebstoffschicht wurde ein siliconisiertes Papier zum Schutz aufgebracht. Danach lässt man die mit dem Klebstoff beschichtete Platte erkalten.

### 2. Aufbringen der Schichtpresstoffplatte auf einem Trägermaterial

Eine Schichtpressstoffplatte wird bei Raumtemperatur auf einen Träger aufgebracht, indem man die Platte, deren Kleberschicht mit einem siliconisierten Trennpapier beschichtet ist, zunächst auf dem Träger ausrichtet. Anschließend schlägt man das Trennpapier an einer Kante, vorzugsweise an der Schmalkante, nach unten weg und drückt die Platte an der Kante mit der freigelegten Klebeschicht an. Danach zieht man das Trennpapier schrittweise unter Platte heraus und drückt die Platte per Hand am Untergrund an. Vorteilhafterweise kann die Platte mit einer Hartgummiwalze gleichmäßig am Untergrund angedrückt werden. Eine anschließende Bearbeitung der Kanten kann mit üblichen Messern, Feilen, Fräsern und Schleifmitteln erfolgen.

### 3. Mechanische Eigenschaften des Verbundmaterials

### Abhebefestigkeit

Nachfolgend sind Messwerte zur Abhebefestigkeit eines erfindungsgemäßen selbstklebenden HPL auf verschiedenen Substraten dargestellt.

Die Bestimmung der Abhebefestigkeit erfolgte gemäß EN 311. Der Andruck auf den Untergrund erfolgte durch leichtes Andrücken mit Hand bzw. Rolle.

| Trägermaterial | Abhebefestigkeit/ N/mm² |
|---|---|
| Melaminharz-Direktbeschichtete Spanplatte | 0,7-1,5 |
| mit Schichtstoffplatten (HPL+CPL) vorbeschichtete Holzwerkstoffe (Spanplatte, Sperrholz, MDF) | 0,7-1,5 |
| unbeschichtete Holzwerkstoffe (Spanplatte, Sperrholz, Multiplex, MDF) | 0,5-1,0 |
| Polystyrolschaum | 0,2-0,5 |
| Gipsspanplatte | 0,2-0,5 |
| Blähglimmerplatten | 0,2-0,5 |
| Aluminium, Aluminiumwaben | 0,2-0,5 |

Alle o.g. Messwerte basieren auf aufgerauhten HPL-Platten. Glatte, nicht aufgerauhte HPL-Rückseiten liefern etwa 10% niedrigere Werte.

### Messung der Scherfestigkeitsverlusttemperatur

Eine Schichtpressstoffplatte mit einer Klebstoffschicht nach der vorliegenden Erfindung wird auf 25 mm Breite und 70 mm Länge zurechtgeschnitten. Das Teststück so auf einen Träger aufgebracht, dass die Überlappung bzw. der Klebebereich in Längsrichtung 25 mm beträgt. An dem freie, unteren Ende des Teststücks wird ein Gewicht von 500 g befestigt. Anschließend wird der Testaufbau in einen auf 40°C vorgeheizten Ofen eingebracht und 30 min bei 40°C belassen. Danach wird der Ofen mit einer Aufheizrate von 0,37°C pro Minute erwärmt, bis das Teststück sich vom Träger löst.

Mit erfindungsgemäßen, kleberbeschichteten Schichtpresstoffplatten wurden Scherfestigkeitsverlusttemperaturen zwischen 60 und 105°C gemessen.

## Patentansprüche

1. Dekorative Schichtpressstoffplatte mit einer Klebstoffschicht, **dadurch gekennzeichnet, dass** die Klebstoffschicht eine bei Raumtemperatur selbstklebende Schicht eines physikalisch abbindenden, lösemittelfreien Haftklebemittels ist, wobei die Schichtpressstoffplatte nach dem Aufbringen auf einen Träger bei Raumtemperatur eine Abhebekraft von mindestens 0,2 N/mm² aufweist.

2. Dekorative Schichtpressstoffplatte nach Anspruch 1, **dadurch gekennzeichnet, dass** die Schichtpressstoffplatte nach dem Aufbringen auf einen Träger eine Abhebekraft von 0,5 bis 1,5 N/mm² aufweist.

3. Dekorative Schichtpressstoffplatte nach Anspruch 1, **dadurch gekennzeichnet, dass** bis zu einer Temperaturbelastung von 80°C über mindestens 2 Stunden kein Abschälen der Platte von dem Träger auftritt.

4. Dekorative Schichtpressstoffplatte nach Anspruch 1 bis 3, **dadurch gekennzeichnet, dass** die selbstklebende Schicht in einer Menge von 80 bis 300 g/m² aufgetragen ist.

5. Dekorative Schichtpressstoffplatte nach Anspruch 1 bis 4, **dadurch gekennzeichnet, dass** die selbstklebende Schicht ein thermoplastisches Elastomer, ein Blockcopolymer, ein Kohlenwasserstoffharz und einen Weichmacher umfasst.

6. Dekorative Schichtpressstoffplatte nach Anspruch 1 bis 4, **dadurch gekennzeichnet, dass** es sich bei dem Schichtpressstoff um eine Hochdruck-Schichtpressstoffplatte (HPL) oder eine kontinuierlich hergestellte Schichtpressstoffplatte (CPL) handelt.

7. Verbundmaterial, umfassend einen Träger und eine Schichtpressstoffplatte entsprechend den Ansprüchen 1-6, die auf den Träger aufgebracht ist.

8. Verbundmaterial nach Anspruch 7, **dadurch gekennzeichnet, dass** der Träger ein flüssigkeitsaufnehmender Träger ist, insbesondere eine unbeschichtete Spanplatte oder ein unbeschichteter Holzwerkstoff.

9. Verbundmaterial nach Anspruch 7, **dadurch gekennzeichnet, dass** der Träger ein nicht flüssigkeitsaufnehmender Träger ist, insbesondere ein Metall, eine Keramik, ein Glas, ein beschichteter Holzwerkstoff oder eine beschichtete Spanplatte.

10. Verfahren zur Herstellung einer Schichtpressstoffplatte entsprechend den Ansprüchen 1-6, **dadurch gekennzeichnet, dass** man das Haftklebemittel bei einer Temperatur von 150 - 190° auf eine Schichtpressstoffplatte aufträgt und anschließend erkalten lässt.

11. Verwendung einer dekorativen Schichtpressstoffplatte entsprechend den Ansprüchen 1-6 zur Verkleidung eines Trägermaterials.

## Claims

1. A decorative laminated sheet with an adhesive layer, **characterised in that** the adhesive layer is layer of a physically bonding, solvent-free pressure-sensitive adhesive, said layer being self-adhesive at room temperature, whereby the laminated sheet exhibits a lift-off force of at least 0.2 N/mm² after application onto a substrate at room temperature.

2. The decorative laminated sheet according to claim 1, **characterised in that** the laminated sheet exhibits a lift-off force of 0.5 to 1.5 N/mm² after application onto a substrate.

3. The decorative laminated sheet according to claim 1, **characterised in that** no peeling-off of the sheet from the substrate occurs up to a temperature load of 80°C during at least 2 hours.

4. The decorative laminated sheet according to claim 1 to 3, **characterised in that** the self-adhesive layer is applied in a quantity of 80 to 300 g/m².

5. The decorative laminated sheet according to claim 1 to 4, **characterised in that** the self-adhesive layer comprises a thermoplastic elastomer, a block copolymer, a hydrocarbon resin and a softening agent.

6. The decorative laminated sheet according to claim 1 to 4, **characterised in that** the laminated plastic is a high-pressure laminated sheet (HPL) or a continuously produced laminated sheet (CPL).

7. A composite, comprising a substrate and a laminated sheet according to claims 1 - 6, which is applied onto the substrate.

8. The composite according to claim 7, **characterised in that** the substrate is a liquid-absorbing substrate, in particular an uncoated chip board or an uncoated wood material.

9. The composite according to claim 7, **characterised in that** the substrate is a non-liquid-absorbing substrate, in particular a metal, a ceramic, a glass, a coated wood material or a coated chip board.

10. A method for producing a laminated sheet according to claims 1 - 6, **characterised in that** the pressure-sensitive adhesive is applied onto a laminated sheet at a temperature of 150 - 190° and is then allowed to cool.

11. Use of a decorative laminated sheet according to claims 1 - 6 for the lining of a substrate material.

## Revendications

1. Plaque stratifiée décorative comportant une couche d'adhésif, **caractérisée en ce que** la couche d'adhésif est une couche autocollante à température ambiante d'un agent adhésif sans solvant, à prise physique, la plaque stratifiée présentant, après l'application sur un support à température ambiante, une force de décollement d'au moins 0,2 N/mm².

2. Plaque stratifiée décorative selon la revendication 1, **caractérisée en ce que** la plaque stratifiée présente, après application sur un support, une force de décollement de 0,5 à 1,5 N/mm².

3. Plaque stratifiée décorative selon la revendication 1, **caractérisée en ce qu'**il n'y a aucun pelage de la plaque du support jusqu'à une charge de température de 80°C pendant au moins 2 heures.

4. Plaque stratifiée décorative selon les revendications 1 à 3, **caractérisée en ce que** la couche autocollante est appliquée à raison de 80 à 300 g/m².

5. Plaque stratifiée décorative selon les revendications 1 à 4, **caractérisée en ce que** la couche autocollante comprend un élastomère thermoplastique, un copolymère de bloc, une résine d'hydrocarbure et un plastifiant.

6. Plaque stratifiée décorative selon les revendications 1 à 4, **caractérisée en ce que** le stratifié est une plaque stratifiée haute pression (HPL) ou une plaque stratifiée fabriquée en continu (CPL).

7. Matériau composite, comprenant un support et une plaque stratifiée correspondant aux revendications 1 à 6, qui est appliquée sur le support.

8. Matériau composite selon la revendication 7, **caractérisé en ce que** le support est un support absorbant le liquide, en particulier un panneau d'aggloméré non revêtu ou un matériau dérivé du bois non revêtu.

9. Matériau composite selon la revendication 7, **caractérisé en ce que** le support est un support n'absorbant pas le liquide, en particulier un métal, une céramique, un verre, un matériau dérivé du bois revêtu ou un panneau d'aggloméré revêtu.

10. Procédé destiné à la fabrication d'une plaque stratifiée correspondant aux revendications 1 à 6, **caractérisé en ce que** l'on applique l'agent adhésif à une température de 150-190° sur une plaque stratifiée puis qu'on le laisse refroidir.

11. Utilisation d'une plaque stratifiée correspondant aux revendications 1 à 6 destinée au revêtement d'un matériau support.
